# EUROPÄISCHE PATENTANMELDUNG

(11) **EP 1 464 852 A2**
(43) Veröffentlichungstag der Anmeldung: **06.10.2004**
(21) Anmeldenummer: 04003237.7
(22) Anmeldetag: 13.02.2004
(51) Int. Cl.: F16B 37/04

(54) **Gelenkhülse für eine Schelle**

(30) Priorität: 02.04.2003 DE 10314999
(71) Anmelder: Rasmussen GmbH, 63477 Maintal (DE)
(72) Erfinder: Barbett, Wolfgang, 46414 Rhede (DE); Krämer, Markus, 63533 Mainhausen (DE)
(74) Vertreter: Knoblauch, Andreas, Dr.-Ing.

(57) **Zusammenfassung**

Eine Gelenkhülse (1) für eine Schelle, bei der geschlossene Schlaufen an den Enden eines Schellenbandes jeweils eine Gelenkhülse (1) umgeben und mindestens eine durch Schlitze in den Schlaufen sowie koaxiale Löcher (2,3) in den Gelenkhülsen (1) hindurchgeführte Spannschraube mit ihrem Kopf beim Spannen an der einen Gelenkhülse (1) drehbar und eine mit dem Gewindeschaft der Spannschraube verschraubte Mutter (9) mit mehrkantiger Umfangskontur an der anderen Gelenkhülse durch eine spezielle Formgebung der Gelenkhülse (1) gegen Drehung gesichert abgestützt ist. Das eine der koaxialen Löcher (2,3) ist kreisrund und hat einen nahezu dem Schaftdurchmesser der Spannschraube entsprechenden Durchmesser. Um zu erreichen, daß die Gelenkhülse höheren Spannkräften ohne erhebliche Verformung standhält, ist dafür gesorgt, daß die koaxialen Löcher (2,3) gleich sind, daß jede Gelenkhülse (1) neben den koaxialen Löchern (2,3) zumindest innerhalb der mehrkantigen Umfangskontur der Mutter (9) und der Umfangskontur des Spannschraubenkopfes in Querrichtung zusammengedrückt ist und ein im montierten Zustand von Gelenkhülse (1), Spannschraube und Mutter (9) an den mehrkantigen Umfang der Mutter (9) angrenzender Wandbereich der Gelenkhülse (1) entsprechend der mehrkantigen Umfangskontur der Mutter (9) verformt ist.

## Beschreibung

Die Erfindung bezieht sich auf eine Gelenkhülse für eine Schelle, bei der geschlossene Schlaufen an den Enden eines Schellenbandes jeweils eine Gelenkhülse umgeben und mindestens eine durch Schlitze in den Schlaufen sowie durch sich diametral in Bezug auf die Gelenkhülse gegenüberliegende koaxiale Löcher in den Gelenkhülsen hindurchgeführte Spannschraube mit ihrem Kopf beim Spannen an der einen Gelenkhülse drehbar und eine mit dem Gewindeschaft der Spannschraube verschraubte Mutter mit mehrkantiger Umfangskontur an der anderen Gelenkhülse durch eine spezielle Formgebung der Gelenkhülse gegen Drehung gesichert abgestützt ist, wobei das eine der sich gegenüberliegenden Löcher kreisrund ist und einen nahezu dem Schaftdurchmesser der Spannschraube entsprechenden Durchmesser hat.

Bei einer bekannten Gelenkhülse dieser Art (DE 37 29 372 C2) ist die Mutter dadurch gegen Drehung gesichert, daß sie in einem viereckigen Loch der Gelenkhülse versenkt ist, dessen Weite in Längsrichtung der Gelenkhülse gleich der Schlüsselweite der Mutter und dessen Weite in Querrichtung der Gelenkhülse etwa gleich dem Durchmesser des Schaftes der Spannschraube ist. Die Mutter stützt sich daher im gespannten Zustand auf den Längsrändern des Loches ab und liegt mit zwei ihrer parallelen Seitenflächen an den gewölbten Querrändern des Loches an. Die Anlage der Mutter an den Querrändern verhindert eine Drehung der Mutter. Der Flächeninhalt des viereckigen Loches ist jedoch erheblich größer als der Inhalt der Querschnittsfläche des Schraubenschafts. Dies bewirkt eine entsprechend große Schwächung der Wand der Gelenkhülse zwischen den sich gegenüberliegenden Löchern, obwohl das andere der beiden Löcher rund und sein Durchmesser gleich dem Schaftdurchmesser der Spannschraube ist. Die Gelenkhülse hält daher keinen sehr hohen Spannkräften ohne erhebliche Verformung stand, wie sie insbesondere bei Rohrschellen ausgeübt werden, die zum Verbinden von Rohren dienen.

Bei einer anderen bekannten Rohrschelle (DE 299 24 269 U1) mit zwei Schlaufen an jedem Ende eines Schellenbandes sind Gelenkteile aus teilweise gewölbten Blechstreifen in den Schlaufen angeordnet. In den Gelenkteilen sind Muttern auf zwei durch Schlitze in den Schlaufen und Öffnungen in den Gelenkteilen hindurchgeführten Spannschrauben unverdrehbar angeordnet. Auch diese Gelenkteile sind nicht sehr hoch belastbar, ohne sich zu verformen.

Der Erfindung liegt die Aufgabe zugrunde, eine Gelenkhülse der eingangs geschilderten Art anzugeben, die höheren Spannkräften ohne erhebliche Verformung standhält.

Erfindungsgemäß ist diese Aufgabe dadurch gelöst, daß die koaxialen Löcher gleich sind, daß jede Gelenkhülse neben den koaxialen Löchern zumindest innerhalb der mehrkantigen Umfangskontur der Mutter und der Umfangskontur des Spannschraubenkopfes in Querrichtung zusammengedrückt ist und ein im montierten Zustand von Gelenkhülse, Spannschraube und Mutter an den mehrkantigen Umfang der Mutter angrenzender Wandbereich der Gelenkhülse entsprechend der mehrkantigen Umfangskontur der Mutter verformt ist.

Bei dieser Lösung sind die Flächeninhalte der koaxialen Löcher beide etwa gleich dem der Querschnittsfläche des Spannschraubenschafts und entsprechend klein. Die durch die koaxialen Löcher bedingte Materialschwächung der Gelenkhülse zwischen diesen Löchern ist entsprechend geringer und die Steifheit der Gelenkhülse größer. Ferner bewirkt die Verformung der Gelenkhülse in einem Umfangsbereich neben den koaxialen Löchern eine zusätzliche Versteifung der Gelenkhülse.

Vorzugsweise ist dafür gesorgt, daß die mehrkantige Umfangskontur der Mutter durch einen mehrkantigen Körperteil der Mutter gebildet ist, der einen koaxialen zylindrischen Fortsatz aufweist, dessen Außendurchmesser kleiner als der Umkreisdurchmesser des mehrkantigen Körperteils ist und der im Preßsitz in die koaxialen Löcher eingesetzt ist. Die Mutter bleibt daher stets mit der Gelenkhülse unverlierbar verbunden. Bei der Montage der Gelenkhülsenschelle braucht nur die Spannschraube in die Löcher der beiden Gelenkhülsen und Mutter(n) eingeführt und festgezogen zu werden.

Der Fortsatz kann eine außen umlaufende, sich zum freien Ende des Fortsatzes hin konisch verjüngende Halterippe aufweisen, die in wenigstens einem der koaxialen Löcher im Preßsitz anliegt. Diese Halterippe erleichtert das Einführen des Fortsatzes in die koaxialen Löcher und ermöglicht eine Erhöhung der Festigkeit der Verbindung zwischen Gelenkhülse und Mutter entsprechend dem Übermaß des maximalen Außendurchmessers der Halterippe gegenüber dem Durchmesser der Löcher und der Einsatztiefe des Fortsatzes in die Löcher.

Vorzugsweise weist die Halterippe eine Rändelung auf. Die Rändelung (oder Riffelung) der Halterippe steigert aufgrund ihrer Rauhigkeit die Festigkeit der Preßsitz-Verbindung zwischen Gelenkhülse und Mutter.

Vorteilhaft ist es ferner, wenn sich das Gewinde der Mutter bis in den Fortsatz erstreckt. Dies erhöht die Eingrifflänge der Spannschraube in der Mutter und damit die Festigkeit der Gewinde-Verbindung zwischen Spannschraube und Mutter.

Die Gelenkhülse kann aus einem Blechstreifen geformt und an aneinanderliegenden Längsrändern des Blechstreifens verschweißt sein. Diese Ausbildung ermöglicht die Herstellung von Gelenkhülsen durch Abschneiden einer größeren Anzahl von Blechstreifen in der gewünschten Länge von einem sehr viel längeren Blechstreifen, dessen Breite dem Umfang der Gelenkhülsen entspricht, Stanzen der Löcher in die abgeschnittenen Blechstreifen, Verformen des Umfangsbereichs der Löcher und Biegen der abgeschnittenen Blechstreifen zu Hülsen in derselben Stanz- und Biegemaschine. Danach werden die nach dem Biegen der Hülsen zusammenstoßenden-Ränder der abgeschnittenen Blechstreifen verschweißt. Das Verschweißen erhöht die Steifheit der Gelenkhülsen.

Alternativ kann die Gelenkhülse aus einem ungeschweißten (nahtlosen) Rohrstück geformt sein. Hierbei kann ebenfalls eine größere Anzahl von Rohrstücken von einem sehr viel längeren Rohr in der gewünschten Länge abgeschnitten und in derselben Maschine mit Löchern versehen und verformt werden. Hierbei entfällt das Schweissen. Dagegen ist ein langes ungeschweißtes Rohr als Ausgangsmaterial schwieriger herstellbar und nur in geringerer Länge als ein als Ausgangsmaterial benutzter Blechstreifen verfügbar.

Die Erfindung wird nachstehend anhand der beiliegenden Zeichnungen eines bevorzugten Ausführungsbeispiels näher beschrieben. In den Zeichnungen stellen dar:
- Fig. 1: einen Axialschnitt durch die Gelenkhülse mit eingesetzten Muttern, die
- Fig. 2 bis 4: die Gelenkhülse nach Fig. 1 im ungeschnittenen Zustand, jedoch jeweils um 90° gegenüber der Lage nach Fig. 1 weitergedrehter Lage,
- Fig. 5: einen vergrößerten Ausschnitt der Fig. 1,
- Fig. 6: den Querschnitt VI-VI der Fig. 5,
- Fig. 7: den gleichen Axialschnitt der Gelenkhülse wie Fig. 1, jedoch ohne eingesetzte Muttern, die
- Fig. 8 bis 10: die Gelenkhülse nach Fig. 7 im ungeschnittenen Zustand, jedoch jeweils um 90° gegenüber der Lage nach Fig. 7 weitergedrehter Lage,
- Fig. 11: einen vergrößerten Ausschnitt der Fig. 7,
- Fig. 12: den Querschnitt XII-XII der Fig. 11 und
- Fig. 13: eine Seitenansicht einer der Muttern der Gelenkhülse nach den Fig. 1 bis 6 in gegenüber Fig. 1 vergrößertem Maßstab.

Zwei der dargestellten Gelenkhülse (1) gleichende Gelenkhülsen werden in einer nicht dargestellten Schelle, hier einer Rohrschelle, jeweils in zu geschlossenen Schlaufen gebogenen Endabschnitten eines Schellenbandes eingesetzt. Jeder Endabschnitt bildet im vorliegenden Fall zwei Schlaufen mit Schlitzen zur Durchführung einer nicht dargestellten Spannschraube. Die Spannschraube hat einen Kopf mit Innenmehrkant und einen mit Gewinde versehenen Schaft. Die dargestellte Gelenkhülse 1 hat daher zur Durchführung jeweils einer Spannschraube zwei koaxiale Löcher 2, 3. Die Löcher 2, 3 liegen sich diametral in Bezug auf die mittlere Längsachse der Gelenkhülse 1 gegenüber. Sie haben den gleichen Durchmesser, der etwas größer als der des Spannschraubenschafts ist.

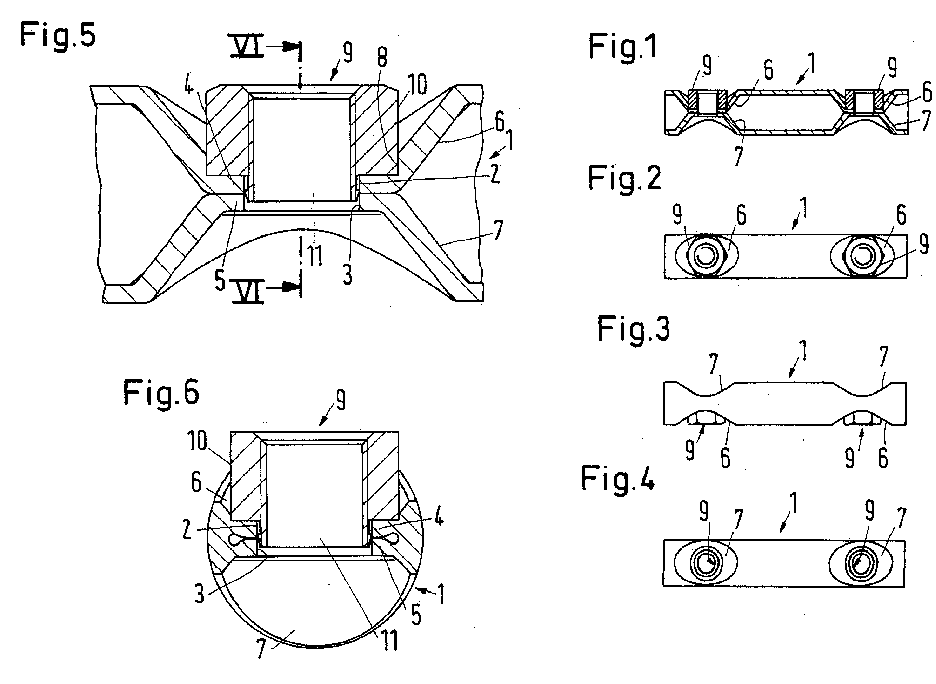

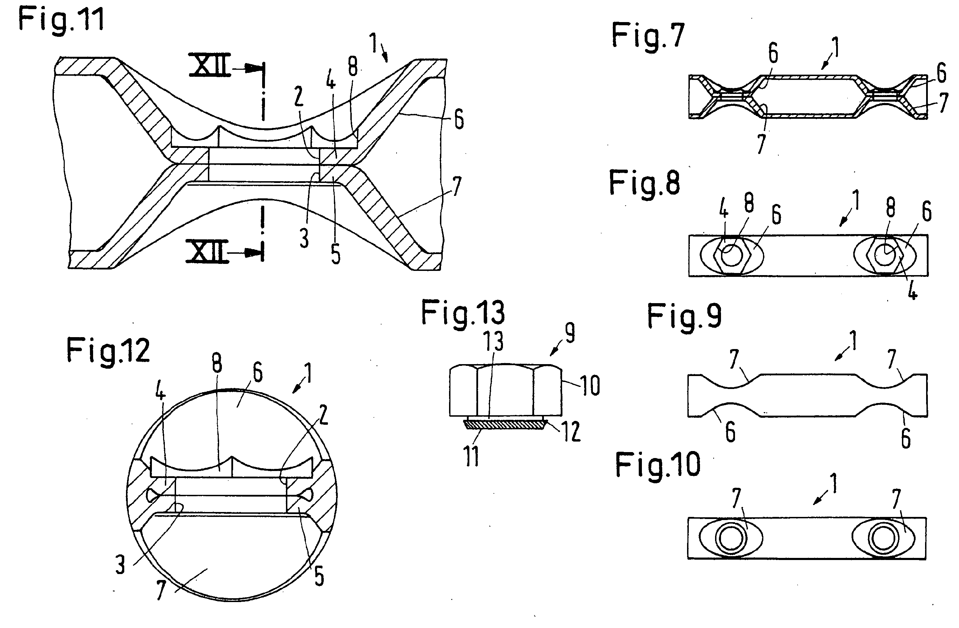

Die Gelenkhülse 1 ist in einem begrenzten Umfangsbereich jedes Lochpaares 2, 3 zusammengedrückt, so daß begrenzte Randbereiche 4, 5 der Löcher 2, 3 in der Mitte der Gelenkhülse 1 aneinander anliegen und sich schräg, wie dargestellt, oder nahezu radial zu den Randbereichen 4, 5 hin verlaufende Wände 6, 7 um die Randbereiche 4, 5 herum ergeben. Der sich um den Randbereich 4 jedes Loches 2 herum erstreckende Wandbereich 8 (siehe insbesondere Fig. 8, 11 und 12) hat eine der mehrkantigen Umfangskontur eines Körperteils 10 einer Mutter 9 entsprechende Mehrkantkontur. Die Mutter 9 ist daher mit ihrem Körperteil 10 passend in die Kontur des Wandbereichs 8 eingesetzt und nicht verdrehbar. Jede Mutter 9 ist mit einem Fortsatz 11, der eine umlaufende Halterippe 12 bildet, in die koaxialen Löcher 2, 3 im Preßsitz eingesetzt. Die Halterippe 12 (siehe Fig. 11) verjüngt sich konisch zu ihrem freien Ende hin und ist auf ihrer Umfangsfläche zur Erhöhung der Reibung zwischen der Halterippe 12 und den Löchern 2, 3 gerändelt. Der Außendurchmesser des Fortsatzes 11, einschließlich seiner Halterippe 12, ist kleiner als der Umkreisdurchmesser des mehrkantigen Körperteils 10 der Mutter 9. Jede Mutter 9 stützt sich daher mit ihrem mehrkantigen Körperteil 10 an einem der Randbereiche 4 ab. Zwischen dem mehrkantigen Körperteil 10 der Mutter 9 und der Halterippe 12 befindet sich eine Ringnut 13 oder Hinterschneidung, in die beim Einpressen des Fortsatzes 11 in die koaxialen Löcher 2, 3 verdrängtes Material der Gelenkhülse 1 eindringen kann. Die Muttern 9 sitzen daher sehr fest zumindest in den Löchern 2 und unverlierbar in der Gelenkhülse 1. Sie bilden daher praktisch eine Einheit mit der Gelenkhülse 1. Ferner ragen sie etwas mit sich diametral gegenüberliegenden Ecken über den Umfang der zylindrisch gebliebenen unverformten Abschnitte der Gelenkhülse 1 hinaus, wie es in Fig. 6 dargestellt ist. Die Gelenkhülse 1 kann dennoch, in einer bestimmten Drehwinkellage ungehindert in das durch den einen Endabschnitt des Schellenbandes gebildete Schlaufenpaar eingeführt werden, wenn der innere Krümmungsradius der Schlaufen geringfügig größer als der Außenradius der zylindrischen Abschnitte der Gelenkhülse 1 ist. Nach der Einführung der Gelenkhülse 1 in die Schlaufen kann sie in eine Drehwinkellage gebracht werden, in der die über den Umfang der Gelenkhülse 1 vorstehenden Ecken der Muttern 9 in jeweils einen Schlitz der Schlaufen ragen, so daß die Gelenkhülse 1 nicht aus den Schlaufen herausfällt, bevor die Spannschrauben in die Muttern 9 eingeschraubt sind.

In jede der beiden Muttern 9 kann eine der beiden Spannschrauben zum Spannen der Rohrschelle eingeschraubt werden. Das Innengewinde jeder Mutter 9 erstreckt sich ferner aus dem Körperteil 10 bis in ihren Fortsatz 11. Dadurch greifen die Gewinde von Mutter und Spannschraube über einen längeren Abschnitt ineinander als ohne den Fortsatz. Die Schraubverbindung ist daher entsprechend höher belastbar.

Durch die Verformung der Gelenkhülse 1 in dem begrenzten Umfangsbereich der koaxialen Löcher 2, 3 ergibt sich eine Versteifung der Gelenkhülse in diesem Bereich, die zu einer sehr hohen Belastbarkeit der Gelenkhülse ohne weitere Verformung, insbesondere Verbiegung, führt, wenn eine mit zwei derartigen Gelenkhülsen 1 versehene Schelle, insbesondere Rohrschelle, gespannt wird. Auch die Muttern 9 tragen hierbei zur Versteifung bei.

Bei Schellen mit nur einer Schlaufe mit einem Schlitz in jedem Endabschnitt des Schellenbandes kann die eine der sich axial erstreckenden Hälften der Gelenkhülse 1, einschließlich der einen Mutter 9, entfallen.

Die in die Schlaufen eingeführten Gelenkhülsen 1 sind vorzugsweise gleich ausgebildet. Der Gewindeschaft der Spannschraube kann dann durch jeweils eine Mutter 9 beider Gelenkhülsen 1 hindurchgeschraubt sein, wobei der Spannschraubenkopf an dem Randbereich 5 oder an der Außenfläche (Stirnfläche) der Mutter 9 der einen Gelenkhülse 1 anliegen kann und der Gewindeschaft der Spannschraube bis in die Mutter 9 der anderen (gegenüberliegenden) Gelenkhülse 1 der Schelle eingreift. Wenn beide Gelenkhülsen 1 einer Schelle mit Muttern 9 versehen sind, ist auch die Gefahr vermindert, daß die Spannschraube verlorengeht bzw. beide Spannschrauben verlorengehen.

Es ist daher auch möglich, nur die eine Gelenkhülse einer Schelle mit einer oder zwei Muttern 9 zu versehen und bei der anderen Gelenkhülse 1, die der Abstützung des Schraubenkopfes dient, die Mutter(n) 9 wegzulassen.

Die Gelenkhülse 1 kann aus einem Blechstreifen geformt und an aneinanderliegenden Längsrändern des Blechstreifens verschweißt sein. Diese Ausbildung ermöglicht die Herstellung von Gelenkhülsen durch Abschneiden einer größeren Anzahl von Blechstreifen in der gewünschten Länge von einem sehr viel längeren Blechstreifen, dessen Breite dem Umfang der Gelenkhülsen entspricht, Stanzen der Löcher in die abgeschnittenen Blechstreifen, Verformen des Umfangsbereiches der Löcher und Biegen der abgeschnittenen Blechstreifen zu Hülsen in derselben Stanz- und Biegemaschine. Die nach dem Biegen der Gelenkhülsen 1 zusammenstoßenden Ränder der abgeschnittenen Blechstreifen werden dann verschweißt. Das Verschweißen erhöht die Steifheit der Gelenkhülsen.

Alternativ kann jede Gelenkhülse 1 aus einem ungeschweißten Rohrstück geformt sein. Hierbei kann ebenfalls eine größere Anzahl von Rohrstücken von einem sehr viel längeren Rohr in der gewünschten Länge abgeschnitten und in derselben Maschine in die in den Fig. 7 bis 11 und 12 dargestellte Form verformt werden. Hierbei entfällt das Schweißen. Dagegen ist ein langes ungeschweißtes (nahtloses) Rohr als Ausgangsmaterial schwieriger herstellbar und nur in geringerer Länge als ein als Ausgangsmaterial benutzter Blechstreifen verfügbar.

Die Gelenkhülse 1 ist auch bei Schellen anwendbar, deren Schellenband nur eine Schlaufe an jedem Ende aufweist, wobei jede Schlaufe jedoch mit zwei Schlitzen zur Durchführung je einer Spannschraube versehen ist.

## Patentansprüche

1. Gelenkhülse (1) für eine Schelle, bei der geschlossene Schlaufen an den Enden eines Schellenbandes jeweils eine Gelenkhülse (1) umgeben und mindestens eine durch Schlitze in den Schlaufen sowie durch sich diametral in Bezug auf die Gelenkhülse (1) gegenüberliegende koaxiale Löcher (2, 3) in den Gelenkhülsen (1) hindurchgeführte Spannschraube mit ihrem Kopf beim Spannen an der einen Gelenkhülse (1) drehbar und eine mit dem Gewindeschaft der Spannschraube verschraubte Mutter (9) mit mehrkantiger Umfangskontur an der anderen Gelenkhülse durch eine spezielle Formgebung der Gelenkhülse (1) gegen Drehung gesichert abgestützt ist, wobei das eine der sich gegenüberliegenden Löcher (2, 3) kreisrund ist und einen nahezu dem Schaftdurchmesser der Spannschraube entsprechenden Durchmesser hat, **dadurch gekennzeichnet, daß** die koaxialen Löcher (2, 3) gleich sind, daß jede Gelenkhülse (1) neben den koaxialen Löchern (2, 3) zumindest innerhalb der mehrkantigen Umfangskontur der Mutter (9) und der Umfangskontur des Spannschraubenkopfes in Querrichtung zusammengedrückt ist und ein im montierten Zustand von Gelenkhülse (1), Spannschraube und Mutter (9) an den mehrkantigen Umfang der Mutter (9) angrenzender Wandbereich der Gelenkhülse (1) entsprechend der mehrkantigen Umfangskontur der Mutter (9) verformt ist.

2. Gelenkhülse nach Anspruch 1, **dadurch gekennzeichnet, daß** die mehrkantige Umfangskontur der Mutter (9) durch einen mehrkantigen Körperteil (10) der Mutter (9) gebildet ist, der einen koaxialen zylindrischen Fortsatz (11) aufweist, dessen Außendurchmesser kleiner als der Umkreisdurchmesser des mehrkantigen Körperteils (10) ist und der im Preßsitz in die koaxialen Löcher (2, 3) eingesetzt ist.

3. Gelenkhülse nach Anspruch 2, **dadurch gekennzeichnet, daß** der Fortsatz (11) eine außen umlaufende, sich zum freien Ende des Fortsatzes (11) hin konisch verjüngende Halterippe (12) aufweist, die in wenigstens einem der koaxialen Löcher (2, 3) im Preßsitz anliegt.

4. Gelenkhülse nach Anspruch 3, **dadurch gekennzeichnet, daß** die Halterippe (12) eine Rändelung aufweist.

5. Gelenkhülse nach einem der Ansprüche 2 bis 4, **dadurch gekennzeichnet, daß** sich das Gewinde der Mutter (9) bis in den Fortsatz (11) erstreckt.

6. Gelenkhülse nach einem der Ansprüche 1 bis 5, **dadurch gekennzeichnet, daß** die Gelenkhülse (1) aus einem Blechstreifen geformt und an aneinanderliegenden Längsrändern des Blechstreifens verschweißt ist.

7. Gelenkhülse nach einem der Ansprüche 1 bis 5, **dadurch gekennzeichnet, daß** die Gelenkhülse (1) aus einem ungeschweißten Rohrstück geformt ist.
